# EUROPEAN PATENT APPLICATION

(11) **EP 3 789 684 A1**
(43) Date of publication of application: **10.03.2021**
(21) Application number: 19195620.0
(22) Date of filing: 05.09.2019
(51) Int. Cl.: F24D 11/00, F24T 10/15, F28D 20/00

(54) **TEMPERATURE REGULATING MODULE AND A SYSTEM COMPRISING THE SAME**

(71) Applicant: E.ON Sverige AB, 205 09 Malmö (SE)
(72) Inventor: ROSÉN, Per, 227 33 Lund (SE); SKOGSTRÖM, Jacob, 234 42 Lomma (SE); ROSENQVIST, Fredrik, 254 51 Helsingborg (SE); LINDOFF, Bengt, 237 35 Bjärred (SE)
(74) Representative: AWA Sweden AB

(57) **Abstract**

A temperature regulating module (10) for regulating a temperature of a thermal distribution fluid in a district thermal energy distribution system, the temperature regulating module (10) comprising: a temperature regulating conduit (11) connected to a main conduit (30) of the district thermal energy distribution system at a first connection point (13) and at a second connection point (15);and a first valve arrangement (14) configured to selectively let the thermal distribution fluid flow in the temperature regulating conduit (11). A system comprising a district thermal energy distribution system and a temperature regulating module (10) is also presented. Further, a method for regulating a temperature of thermal distribution fluid in a district thermal energy distribution system is presented.

## Description

### Technical field

The present disclosure relates to a regulating a temperature of a thermal distribution fluid in a district thermal energy distribution system.

### Background art

Nearly all large developed cities in the world have at least two types of energy grids incorporated in their infrastructures; one grid for providing electrical energy and one grid for providing space heating and hot tap water preparation. Today, a common grid used for providing space heating and hot tap water preparation is a gas grid providing a burnable gas, typically a fossil fuel gas. The gas provided by the gas grid is locally burned for providing space heating and hot tap water. An alternative for the gas grid for providing space heating and hot tap water preparation is a district heating grid. Also, the electrical energy of the electrical energy grid may be used for space heating and hot tap water preparation. Also, the electrical energy of the electrical energy grid may be used for space cooling. The electrical energy of the electrical energy grid is further used for driving refrigerators and freezers.

Accordingly, traditional building heating and cooling systems use primary high-grade energy sources such as electricity and fossil fuels or an energy source in the form of industrial waste heat to provide space heating and/or cooling, and to heat or cool water used in the building. Furthermore, it has been increasingly common to also install a district cooling grid in cities for space cooling. The process of heating or cooling the building spaces and water converts this high-grade energy into low grade waste heat with high entropy which leaves the building and is returned to the environment.

Hence, there is a need for improvements in how to provide heating and cooling to a city.

### Summary

It is an object of the present invention to provide heating or cooling to a city in an improved manner.

According to a first aspect, a temperature regulating module for regulating a temperature of a thermal distribution fluid in a district thermal energy distribution system is provided. The temperature regulating module comprising a temperature regulating conduit connected to a main conduit of the district thermal energy distribution system at a first connection point and at a second connection point, and a first valve arrangement configured to selectively let the thermal distribution fluid flow in the temperature regulating conduit.

By such a module it is possible to regulate the temperature of a thermal distribution fluid in a district thermal energy distribution system. The temperature of the fluid may be regulated by letting the fluid flow through the temperature regulating module. In the temperature regulating module the fluid can interact with an environment surrounding the temperature regulating module in such a way that the temperature of the fluid is affected. The temperature of the fluid may be increased, or it may be decreased, depending on the temperature of the surrounding environment. For example, during summer excess heat in the fluid may be deposited in the environment surrounding the temperature regulating module. Further, during winter excess cold in the fluid may be deposited in the environment surrounding the temperature regulating module. Further, by such a module it may be possible to regulate the temperature of environment surrounding the temperature regulating module. The temperature of environment may be increased, or it may be decreased, depending on the temperature of the fluid. For example, the temperature regulating module may be arranged at a soccer field, and by controlling the flow of thermal distribution fluid comprising excess heat in the temperature regulating conduit, the soccer field may be heated during cold times. According to another example, the temperature regulating module may be arranged at a building foundation and by controlling the flow of thermal distribution fluid comprising excess heat in the temperature regulating conduit, the building foundation may be heated during cold times and/or heated in order to remove moist therein.

The first valve arrangement may be configured to let the thermal distribution fluid flow in both the temperature regulating conduit and in the main conduit at the same time. A proportion of the flow in the temperature regulating module may be controllable by the valve. By this the temperature regulation can be controlled by controlling the amount or ratio of the fluid which passes through the temperature regulating conduit. Thus, an improved temperature regulation can be achieved.

The first valve arrangement may be configured to selectively let the thermal distribution fluid flow in either the temperature regulating conduit or in the main conduit. By this the temperature regulation can be controlled by alternatively letting the fluid pass through the temperature regulating conduit or through the main conduit. Thus, an improved temperature regulation can be achieved.

A temperature regulating environment surrounding the temperature regulating conduit between the first connection point and the second connection point may be different from a main conduit environment surrounding the main conduit between the first connection point and the second connection point. By this the interaction between the fluid passing through the temperature regulating conduit and its surrounding environment may be different than the interaction between the fluid passing through the main conduit and its surrounding environment. Thus, it is possible to for example regulate the temperature of the fluid by having an environment with a different insulating property or an environment with a different temperature.

The temperature regulating conduit may be made of different material than the main conduit. By this it is possible to achieve a different interaction between thermal distribution fluid passing through the temperature regulating conduit and the surrounding temperature regulating environment than the interaction between thermal distribution fluid passing through the main conduit and the surrounding main conduit environment. Thus, it is possible to regulate the temperature of the thermal distribution fluid by letting it pass through the temperature regulating conduit.

The temperature regulating conduit may be meandering between the first connection point and the second connection point. By this the length of the temperature regulating conduit can be increased between the first connection point and the second connection point. Thus, the interaction between thermal distribution fluid passing through the temperature regulating conduit and the surrounding temperature regulating environment can be increased and thus the temperature regulation improved. A meandering shape allows for a long extension in a compact area. Meandering may here mean that the conduit follows a winding course. Meandering may here mean that the conduit turns for instance at least 6 times between the first and second connection points. Meandering may here mean that the conduit runs parallel to itself along at least three portions of the conduit. Meandering may here mean that the direction of the conduit has turned by 180 degrees at least three times.

An extension of the temperature regulating conduit, between the first connection point and the second connection point, may be longer than an extension of the main conduit, between the first connection point and the second connection point. By this the interaction between thermal distribution fluid passing through the temperature regulating conduit and the surrounding temperature regulating environment can be increased compared to the interaction between thermal distribution fluid passing through the main conduit and the surrounding main conduit environment.

The extension of the temperature regulating conduit, between the first connection point and the second connection point, may be 2 to 1000 times longer than the extension of the main conduit, between the first connection point and the second connection point.

The second connection point may be different from the first connection point. The second connection point may be placed at a distance from the first connection point.

The distance between the first connection point and the second connection point may be between 1 and 10 meters.

According to a second aspect there is provided a system. The system comprising a thermal energy circuit comprising a hot fluid conduit for transporting hot thermal distribution fluid, a cold fluid conduit for transporting cold thermal distribution fluid, and at least one thermal device connected to the hot fluid conduit via a hot fluid connection conduit and to the cold fluid conduit via a cold fluid connection conduit, wherein, during operation, the hot thermal distribution fluid is warmer than the cold thermal distribution fluid; and a temperature regulating module according to the first aspect.

By this it is possible to control a temperature of thermal distribution fluid in such a system by letting thermal distribution fluid pass through the temperature regulating conduit.

The system may comprise a first temperature regulating module according to the first aspect and a second temperature regulating module according to the first aspect, wherein the conduit of the first temperature regulating module is connected to the hot fluid conduit and the conduit of the second temperature regulating module is connected to the cold fluid conduit.

By this it is possible to individually regulate the temperature of the hot fluid conduit and the cold fluid conduit. Thus, it is possible to regulate the temperature difference between the hot fluid conduit and the cold fluid conduit. For example, to keep the temperature difference constant.

According to a third aspect a method for regulating a temperature of thermal distribution fluid in a district thermal energy distribution system is provided. The method comprises controlling a flow of thermal distribution fluid in a temperature regulating conduit connected to a main conduit of the district thermal energy distribution system. The temperature regulating conduit is connected to the main conduit at a first connection point and at a second connection point. The controlling may be made via controlling a valve arrangement controlling a flow of thermal distribution fluid into the temperature regulating conduit at the first connection point.

The step of controlling may comprise, at a first point in time, letting a flow thermal distribution fluid flow in the temperature regulating conduit such that heat or cold of the thermal distribution fluid is stored in an environment surrounding the temperature regulating conduit; and at a second point in time, letting a flow thermal distribution fluid flow in the temperature regulating conduit such that heat or cold stored in the environment surrounding the temperature regulating conduit is extracted from the environment surrounding the temperature regulating conduit, wherein the second point in time is different from the first pint in time.

The step of controlling may comprise during a first period of time, exhaling heat or cold into an environment surrounding the temperature regulating conduit by letting thermal distribution fluid flow through the temperature regulating conduit, and during a second period of time closing the flow of distribution fluid flow through the temperature regulating conduit, wherein the second period of the time is different from the first period of time. The period of time may be part of a day. The period of time may be part of a week. The period of time may be part of a month. The period of time may be part of a year.

The above-mentioned features of the first aspect, when applicable, apply to this third aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects of the present invention will now be described in more detail, with reference to appended figures showing embodiments. The figures should not be considered limiting to the specific embodiment; instead they are used for explaining and understanding.

As illustrated in the figures, the sizes of layers and regions may be exaggerated for illustrative purposes and, thus, are provided to illustrate the general structures of embodiments. Like reference numerals refer to like elements throughout.
Figure 1 is a side view of a temperature regulating module for regulating a temperature of a thermal distribution fluid in a district thermal energy distribution system.
Figure 2 is a side view of a system comprising a thermal energy circuit and a temperature regulating module for regulating a temperature of a thermal distribution fluid in a district thermal energy distribution system.
Fig. 3 is a block scheme of a method for regulating a temperature of thermal distribution fluid in a district thermal energy distribution system.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

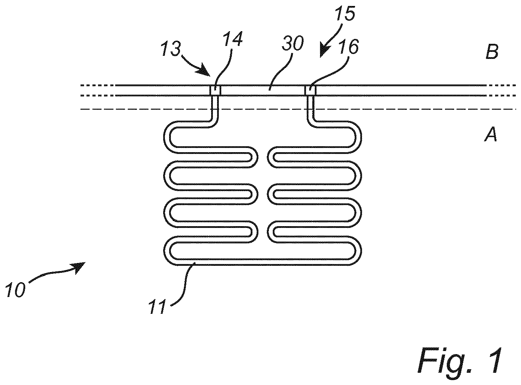

In Figure 1 a temperature regulating module 10 can be seen. The temperature regulating module 10 is configured for regulating a temperature of a thermal distribution fluid in a district thermal energy distribution system. The temperature regulating module 10 comprises a temperature regulating conduit 11. The temperature regulating conduit 11 is connected to a main conduit 30 of the district thermal energy distribution system. The temperature regulating conduit 11 is connected to a main conduit 30 of the district thermal energy distribution system at a first connection point 13, via a first valve arrangement 14. The temperature regulating conduit 11 is also connected to the main conduit 30 of the district thermal energy distribution system at a second connection point 15. The temperature regulating conduit 11 may be connected to the main conduit 30 of the district thermal energy distribution system at the second connection point 15, via a second valve arrangement 16. The first valve arrangement 14 and/or second valve arrangement 16 is/are configured to selectively let the thermal distribution fluid flow in the temperature regulating conduit 11.

The temperature regulating conduit 11 is typically free from any devices connected thereto. Hence, the temperature regulating conduit 11 is typically formed by a continuous unbroken path of one or more tube sections.

The first valve arrangement 14 and/or the second valve arrangement 16 may be configured to selectively let thermal distribution fluid at the same time flow in both the temperature regulating conduit 11 and in the main conduit 30. The proportion of the flow in the temperature regulating module 10 may be controllable by the first valve arrangement 14 and/or the second valve arrangement 16.

Alternatively, or in combination, the first valve arrangement 14 and/or the second valve arrangement 16 may be configured to selectively let thermal distribution fluid flow in either the temperature regulating conduit 11 or in the main conduit 30. The flow in the temperature regulating conduit 11 may hence be controlled by controlling the first valve arrangement 14 and/or the valve arrangement 16. For example, a valve in the first valve arrangement 14 may be opened or closed in order to perform the controlling of the flow of thermal distribution fluid in the temperature regulating conduit 11 and/or the main conduit 10.

An environment A surrounding the temperature regulating conduit 11 may be used as a thermal energy storage. Hence, excess heat or cold in thermal distribution fluid may be stored in the environment A surrounding the temperature regulating conduit 11. The environment A may further be insulated from its surroundings such that stored heat or cold is confined in the environment A. The heat or cold stored in the environment A may be extracted from the environment A at a later point in time by again letting thermal distribution fluid flow through the temperature regulating conduit 11. For example, during summer excess heat of thermal distribution fluid may be stored in the environment A surrounding the temperature regulating conduit 11 by letting thermal distribution fluid flow through the temperature regulating conduit 11. Then during winter, the stored heat may be extracted by once again letting thermal distribution fluid flow through the temperature regulating conduit 11.

The environment A surrounding the temperature regulating conduit 11 may be used for thermal balancing. The thermal balancing may e.g. be made such that excess heat or cold is exhaled from the district thermal energy distribution system by letting thermal distribution fluid flow through the temperature regulating conduit 11 during a period of a day, for example, during daytime or during night-time. According to one example, the environment A used for such thermal balancing may comprise a living roof. A living roof is a roof of a building that is partially or completely covered with vegetation and a growing medium. According to another example, the environment A used for such thermal balancing may comprise water, e.g. a lake, a river or a sea.

An environment A surrounding the temperature regulating conduit 11 may be different from an environment B surrounding the main conduit 30. Especially, the environment A surrounding the temperature regulating conduit 11, between the first connection point 13 and the second connection point 15, may different from the environment B surrounding the main conduit 30, between the first connection point 13 and the second connection point 15. This does not necessarily mean that the two environments A, B have to be different at every point along the temperature regulating conduit 11 or the main conduit 30, between the first connection point 13 and the second connection point 15.

The environment A surrounding the temperature regulating conduit 11 may be of a material with a larger thermal conduction coefficient than a material of the environment B surrounding the main conduit 30.

The environment A surrounding the temperature regulating conduit 11 may have a different temperature than the environment B surrounding the main conduit 30. The temperature may be higher in the environment A than in the environment B. The temperature may be lower in the environment A than in the environment B. The temperature in the environment A may be regulated by letting thermal distribution fluid flow through the temperature regulating conduit 11.

The temperature regulating conduit 11 may be made from a different material than the main conduit 30. The temperature regulating conduit 11 may be made from a material which has a larger thermal conduction coefficient than the material of the main conduit 30. The temperature regulating conduit 11 may be made from a material which allows for a greater thermal interaction with the surrounding environment than the material of the main conduit 30 does.

The temperature regulating conduit 11 may have a different insulation than the main conduit 30. The insulation of the temperature regulating conduit 11 may be less than the insulation of the main conduit 30.

An extension of the temperature regulating conduit 11 between the first connection point 13 and the second connection point 15 mat be longer than an extension of the main conduit 30 between the first connection point 13 and the second connection point 15. For example, the temperature regulating conduit 11 may be meandering between the first connection point 13 and the second connection point 15. The extension of the temperature regulating conduit 11, between the first connection point 13 and the second connection point 15, may be between 2 and 100 times longer than the extension of the main conduit 30, between the first connection point 13 and the second connection point 15. Other examples include between 2 to 4 times longer, 4 to 10 times longer, 2 to 10 times longer, 10 to 100 times longer, 10 to 20 times longer, 10 to 50 times longer, 50 to 100 times longer and 80 to 100 times longer.

The second connection point 15 may be placed at a distance from the first connection point 13. As an example, this distance may be between 2 and 20 meters. An alternative is a distance between 2 and 5 meters, or 5 and 10 meters, or 10 and 15 meters, or 10 and 20 meters.

It is possible that two, or more, temperature regulating modules are connected to the same main conduit. A first temperature regulating module may be configured for increasing the temperature of the fluid in the main conduit. A second temperature regulating module may be configured for decreasing the temperature of the fluid in the main conduit.

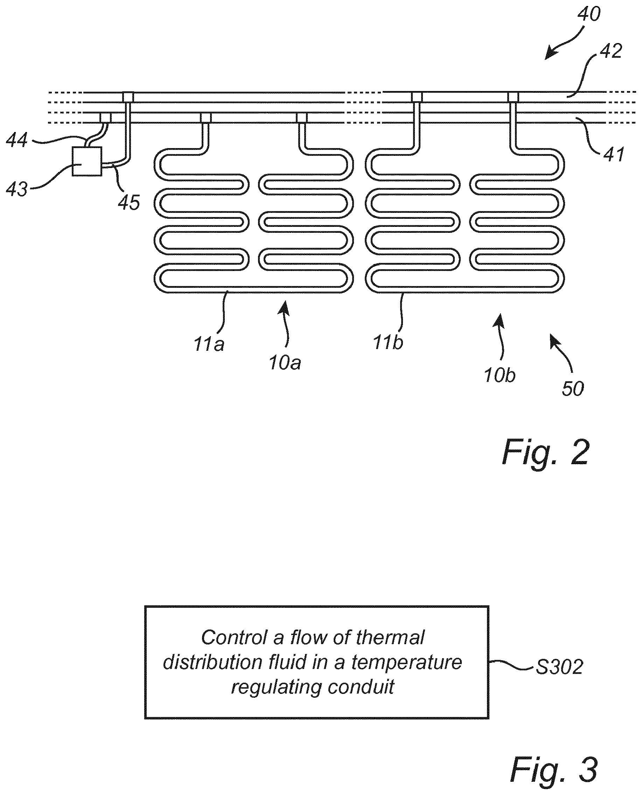

In Figure 2 a system 50 comprising a temperature regulating module 10 as described in relation to Figure 1 and a thermal energy circuit 40 can be seen.

The thermal energy circuit 40 comprises a hot fluid conduit 41 for transporting hot thermal distribution fluid, a cold fluid conduit 42 for transporting cold thermal distribution fluid and at least one thermal device 43. During operation, the hot thermal distribution fluid is warmer than the cold thermal distribution fluid.

The thermal device 43 is connected to the hot fluid conduit 41 via a hot fluid connection conduit 44 and to the cold fluid conduit 42 via a cold fluid connection conduit 45. The system 50 may comprise a plurality of thermal devices 43.

Each thermal device 43 is configured to extract either heat or cold from the thermal energy circuit 40. Heat is extracted from the thermal energy circuit 40 by lettering hot thermal distribution fluid from the hot fluid conduit 41 flow through a heat pump or heat exchanger of the thermal device 43 whereat the hot thermal distribution fluid is cooled. The cooled thermal distribution fluid is then returned into the cold fluid conduit 42. Cold is extracted from the thermal energy circuit 40 by lettering cold thermal distribution fluid from the cold fluid conduit 42 flow through a heat pump or heat exchanger of the thermal device 43 whereat the cold thermal distribution fluid is heated. The heated thermal distribution fluid is then returned into the hot fluid conduit 41.

As mentioned above, the temperature regulating conduit 11 is typically free from any devices connected thereto. Especially, no thermal device 43 configured to extract either heat or cold form the conduit it is connected to is connected to the temperature regulating conduit 11.

The system 50 may comprises two (or more) temperature regulating modules 10 as described in relation to Figure 1. For example, a first temperature regulating module 10a and a second temperature regulating module 10a. The first temperature regulating module 10a may be different from the second temperature regulating module 10b. The temperature regulating conduit 11a of the first temperature regulating module 10a may be connected to the hot fluid conduit 41. The temperature regulating conduit 11 b of the second temperature regulating module 20 may be connected to the cold fluid conduit 42.

The first temperature regulating conduit 11 may be made from a material which has a different thermal conduction coefficient than the material of the second temperature regulating conduit 21. The thermal conduction coefficient of the first temperature regulating conduit 11 may be larger than the thermal conduction coefficient of the second temperature regulating conduit 21, or it may be the other way around.

The first temperature regulating conduit 11 may be made from a material which allows for a greater thermal interaction with the surrounding environment than the material of the second temperature regulating conduit 21 does, or it may be the other way around.

The first temperature regulating conduit 11 may have a different insulation than the second temperature regulating conduit 21. The insulation of the first temperature regulating conduit 21 may be larger than the insulation of the second temperature regulating conduit 21, or it may be the other way around.

The environment surrounding the first temperature regulating conduit 11 may be different than the environment surrounding the second temperature regulating conduit 21.

In connection with Fig. 3 a method for regulating a temperature of thermal distribution fluid in a district thermal energy distribution system will be discussed. The method comprises the following steps/acts. The steps/act may be performed in any suitable order.

Controlling S302 a flow of thermal distribution fluid in the temperature regulating conduit 11 connected to the main conduit 30 of the district thermal energy distribution system. As discussed above, the temperature regulating conduit 11 is connected to the main conduit 30 at a first connection point 13 and at a second connection point 15.

The step of controlling may comprise: at a first point in time, letting a flow thermal distribution fluid flow in the temperature regulating conduit 11 such that heat or cold of the thermal distribution fluid is stored in an environment A surrounding the temperature regulating conduit 11; and at a second point in time, letting a flow thermal distribution fluid flow in the temperature regulating conduit 11 such that heat or cold stored in the environment surrounding the temperature regulating conduit 11 is extracted from the environment surrounding the temperature regulating conduit 11, wherein the second point in time is different from the first pint in time.

The step of controlling may comprise: during a first period of a day, exhaling heat or cold into an environment A surrounding the temperature regulating conduit 11 by letting thermal distribution fluid flow through the temperature regulating conduit 11; and during a second period of the day closing the flow of distribution fluid flow through the temperature regulating conduit 11, wherein the second period of the day is different from the first period of the day.

The person skilled in the art realizes that the present invention by no means is limited to the preferred embodiments described above. On the contrary, many modifications and variations are possible within the scope of the appended claims.

For example, it is also possible that the environment A surrounding the temperature regulating conduit 11, between the first connection point 13 and the second connection point 15, is the same as the environment B surrounding the main conduit 30, between the first connection point 13 and the second connection point 15.

Further, the temperature regulating conduit 11 may comprise a circulation pump for pumping thermal distribution fluid therethrough.

Moreover, it is possible that two (or more) temperature regulating modules are connected to each conduit of the hot fluid conduit and the cold fluid conduit. A first hot fluid conduit temperature regulating module may be configured for increasing the temperature of thermal distribution fluid in the hot fluid conduit. A second hot fluid conduit temperature regulating module may be configured for decreasing the temperature of thermal distribution fluid in the hot fluid conduit. A first cold fluid conduit temperature regulating module may be configured for increasing the temperature of thermal distribution fluid in the cold fluid conduit. A second cold fluid conduit temperature regulating module may be configured for decreasing the temperature of thermal distribution fluid in the cold fluid conduit.

Additionally, variations to the disclosed embodiments can be understood and effected by the skilled person in practicing the claimed invention, from a study of the drawings, the disclosure, and the appended claims.

## Claims

1. A temperature regulating module (10) for regulating a temperature of a thermal distribution fluid in a district thermal energy distribution system, the temperature regulating module (10) comprising:
a temperature regulating conduit (11) connected to a main conduit (30) of the district thermal energy distribution system at a first connection point (13) and at a second connection point (15); and
a first valve arrangement (14) configured to selectively let the thermal distribution fluid flow in the temperature regulating conduit (11).

2. The temperature regulating module (10) according to claim 1,
wherein the first valve arrangement (14) is configured to let the thermal distribution fluid flow in both the temperature regulating conduit (11) and in the main conduit (30), and
wherein the proportion of the flow in the temperature regulating module (10) is controllable by the valve (14).

3. The temperature regulating module (10) according to claim 1, wherein the first valve arrangement (14) is configured to selectively let the thermal distribution fluid flow in either the temperature regulating conduit (11) or the main conduit (30).

4. The temperature regulating module (10) according to any of the preceding claims, wherein a temperature regulating environment (A) surrounding the temperature regulating conduit (11), between the first connection point (13) and the second connection point (15), is different from a main conduit environment (B) surrounding the main conduit (30), between the first connection point (13) and the second connection point (15).

5. The temperature regulating module (10) according to any of the preceding claims, wherein the temperature regulating conduit (11) is made of different material than the main conduit (30).

6. The temperature regulating module (10) according to any of the preceding claims, wherein the temperature regulating conduit (11) is meandering between the first connection point (13) and the second connection point (15).

7. The temperature regulating module (10) according to any of the preceding claims, wherein an extension of the temperature regulating conduit (11), between the first connection point (13) and the second connection point (15), is longer than an extension of the main conduit (30), between the first connection point (13) and the second connection point (15).

8. The temperature regulating module (10) according to claim 7, wherein the extension of the temperature regulating conduit (11), between the first connection point (13) and the second connection point (15), is between 2 and 1000 times longer than the extension of the main conduit (30), between the first connection point (13) and the second connection point (15).

9. The temperature regulating module (10) according to any of the preceding claims, wherein the second connection point (15) is placed at a distance from the first connection point (13).

10. The temperature regulating module (10) according to claim 9, wherein the distance between the first connection point (13) and the second connection point (15) is between 1 and 10 meters.

11. A system (50) comprising:
a thermal energy circuit (40) comprising a hot fluid conduit (41) for transporting hot thermal distribution fluid, a cold fluid conduit (42) for transporting cold thermal distribution fluid, and at least one thermal device (43) connected to the hot fluid conduit (41) via a hot fluid connection conduit (44) and to the cold fluid conduit (42) via a cold fluid connection conduit (45), wherein, during operation, the hot thermal distribution fluid is warmer than the cold thermal distribution fluid, and
a temperature regulating module (10) according to any one of claims 1-10.

12. The system (50) according to claim 11, comprising a first temperature regulating module (10) according to any of claim 1 to 10 and a second temperature regulating conduit module (20) according to any of claim 1 to 10,
wherein the temperature regulating conduit (11) of the first temperature regulating module (10) is connected to the hot fluid conduit (41) and the temperature regulating conduit (21) of the second temperature regulating module (20) is connected to the cold fluid conduit (42).

13. A method for regulating a temperature of thermal distribution fluid in a district thermal energy distribution system, the method comprising:
controlling a flow of thermal distribution fluid in a temperature regulating conduit (11) connected to a main conduit (30) of the district thermal energy distribution system, wherein the temperature regulating conduit (11) is connected to the main conduit (30) at a first connection point (13) and at a second connection point (15).

14. The method according to claim 13, wherein the step of controlling comprises:
at a first point in time, letting a flow thermal distribution fluid flow in the temperature regulating conduit (11) such that heat or cold of the thermal distribution fluid is stored in an environment (A) surrounding the temperature regulating conduit (11); and
at a second point in time, letting a flow thermal distribution fluid flow in the temperature regulating conduit (11) such that heat or cold stored in the environment surrounding the temperature regulating conduit (11) is extracted from the environment surrounding the temperature regulating conduit (11), wherein the second point in time is different from the first pint in time.

15. The method according to claim 13, wherein the step of controlling comprises:
during a first period of time, exhaling heat or cold into an environment (A) surrounding the temperature regulating conduit (11) by letting thermal distribution fluid flow through the temperature regulating conduit (11); and
during a second period of time closing the flow of distribution fluid flow through the temperature regulating conduit (11), wherein the second period of time is different from the first period of time.
